Europäisches Patentamt

European Patent Office

Office européen des brevets

(19)

(11) Veröffentlichungsnummer: **0 061 575**
**A2**

(12) # EUROPÄISCHE PATENTANMELDUNG

(21) Anmeldenummer: **82101186.3**

(51) Int. Cl.³: **F 16 H 37/08**

(22) Anmeldetag: **17.02.82**

(30) Priorität: **31.03.81 DE 3112848**

(43) Veröffentlichungstag der Anmeldung:
**06.10.82 Patentblatt 82/40**

(84) Benannte Vertragsstaaten:
**AT BE CH DE FR GB IT LI LU NL SE**

(71) Anmelder: **Firma Hans Lingl Anlagenbau und
Verfahrenstechnik GmbH & Co. KG
Albrecht-Berblinger-Strasse 6
D-7910 Neu-Ulm(DE)**

(72) Erfinder: **Müller, Walter
Benjamin-Miller-Strasse 5ee 4
D-8908 Krumbach(DE)**

(74) Vertreter: **Körber, Wolfhart, Dr. et al,
Patentanwälte Dipl.Ing.H.Mitscherlich,
Dipl.Ing.K.Gunschmann, Dr.rer.nat.W.Körber,
Dipl.Ing.J.Schmidt-Evers Steinsdorfstrasse 10
D-8000 München 22(DE)**

(54) Überlagerungsgetriebe.

(57) Die Erfindung betrifft ein Überlagerungsgetriebe. Es besteht aus einem Planetengetriebe, welches an der Sonnenradwelle und an dem Hohlrad angetrieben wird sowie aus einem auswechselbaren Vorschaltgetriebe. Das Vorschaltgetriebe wird an der Außenseite des Gehäuses des Planetengetriebes aufgesteckt und ist auswechselbar.

Aus Vorschaltgetriebe kommen Riemengetriebe, als auch Zahnradgetriebe in Frage. Mit einem Regelgetriebe als Vorschaltgetriebe kann das gesamte Getriebe als Wendegetriebe benutzt werden.

FIG. 2

0061575

Dipl.-Ing. H. MITSCHERLICH
Dipl.-Ing. K. GUNSCHMANN
Dr. rer. nat. W. KÖRBER
Dipl.-Ing. J. SCHMIDT-EVERS
PATENTANWÄLTE

D-8000 MÜNCHEN 22
Steinsdorfstraße 10
☏ (089) · 29 66 84

17. Februar 1982
Dr.Kö/je

Firma
Hans Lingl Anlagenbau und
Verfahrenstechnik GmbH & Co.KG
Albrecht-Berblinger-Str. 6

7910 Neu-Ulm

## Überlagerungsgetriebe

Die Erfindung betrifft ein Überlagerungsgetriebe mit einem
in einem Gehäuse angeordneten Planetengetriebe aus einem
Sonnenrad, einem auf der Sonnenradwelle gelagerten Hohlrad und zwischen dem Sonnenrad und dem Hohlrad auf einem
Planetenradträger angeordneten Planetenrädern, wobei das
Sonnenrad und das Hohlrad angetrieben werden und die
Planetenradträgerwelle die Abtriebswelle ist.

Überlagerungsgetriebe dieser Art, die auch als Summengetriebe bezeichnet werden, sind im Stand der Technik
bekannt. Wird an zwei der drei Wellen eines Planetengetriebes angetrieben, so wird die Drehzahl der dritten
Welle, des Abtriebes, durch die Überlagerung der beiden
Antriebsdrehzahlen bestimmt. Mit einer entsprechenden
Einstellung der Antriebsdrehzahlen läßt sich daher
praktisch jede gewünschte Drehzahl des Abtriebes einstellen.

Diese bekannten Überlagerungsgetriebe haben den Nachteil, daß sie für jeden vorgesehenen Verwendungszweck besonders gestaltet werden müssen, daß eine universelle Einsetzbarkeit daher nicht gegeben ist.

Aufgabe der Erfindung ist dementsprechend, ein Summen- oder Überlagerungsgetriebe der eingangs genannten Art so auszugestalten, daß es mit einfachen Mitteln an die jeweils erforderlichen Betriebsbedingungen angepaßt werden kann.

Diese Aufgabe wird bei einem eingangs angegebenen Überlagerungsgetriebe erfindungsgemäss nach der im kennzeichnenden Teil des Patentanspruches 1 angegebenen Weise gelöst.

Vorteilhafte Ausgestaltungen der Erfindung ergeben sich aus den Unteransprüchen.

Das erfindungsgemässe Überlagerungsgetriebe hat den Vorteil, dass es bausteinartig aufgebaut ist. Zur Veränderung des Übersetzungsverhältnisses bzw. der Drehrichtung des Getriebes müssen nur sehr wenige Bauteile, das Vorschaltgetriebe, ausgewechselt werden. Das Vorschaltgetriebe kann selber wieder als kompakte Einheit ausgestaltet sein, so daß zu einer Veränderung des gesamten Getriebes nur das Vorschaltgetriebe abgenommen und ein anderes aufgesteckt werden muß.

Vorteilhafterweise ist das gesamte Überlagerungsgetriebe so ausgestaltet, daß das Planetengetriebe in einem eigenen Gehäuse untergebracht ist und das Vorschaltgetriebe auf Wellen, die aus diesem Gehäuse herausgeführt sind, aufgesteckt wird.

Das Vorschaltgetriebe kann ein Riemengetriebe sein. Wird in einem solchen Fall ein Keilriemen und eine verstellbare Keilriemenscheibe angesetzt, so läßt sich das Übersetzungsverhältnis des Vorschaltgetriebes stufenlos ändern, was zu einer stufenlosen Regelung der Umdrehungszahl der Abtriebswelle des Getriebes führt. Mit diesem Mittel kann auch eine Umkehr der Drehrichtung an der Abtriebswelle hervorgerufen werden, wenn nur die Drehzahlen der beiden Antriebswellen durch Verstellung der Keilriemenscheibe in das entsprechende Verhältnis gebracht werden.

Für den Fall, dass als Vorschaltgetriebe ein Zahnradgetriebe vorgesehen ist, kann auf der Antriebswelle, die das Hohlrad antreibt, ein zweites Zahnrad vorgesehen sein, das in ein Umlenkzahnrad eingreift, das auf einer weiteren Umlenkwelle sitzt. Auf dieser Umlenkwelle ist an der Außenseite des Gehäuses ein weiteres Zahnrad angebracht, das ein Teil des Vorschaltgetriebes ist. Dieses Zahnrad greift in ein weiteres Zahnrad, das auf der Sonnenradwelle befestigt ist und damit das Sonnenrad antreibt. Mit dieser Umlenkwelle und dem zugehörigen Zahnrad wird erreicht, daß sich Hohlrad und Sonnenrad entgegengesetzt zueinander drehen, was wiederum zu einem hohen Übersetzungsverhältnis des Gesamtgetriebes führt.

Im folgenden wird nun die Erfindung anhand der in den Fig. dargestellten Ausführungsbeispielen beschrieben und näher erläutert. Es zeigen

Fig. 1 ein erfindungsgemässen Umlaufrädergetriebe mit einem Zahnradgetriebe als Vorschaltgetriebe;

Fig. 2 eine andere Ausführungsform der Erfindung mit einem Riemengetriebe als Vorschaltgetriebe.

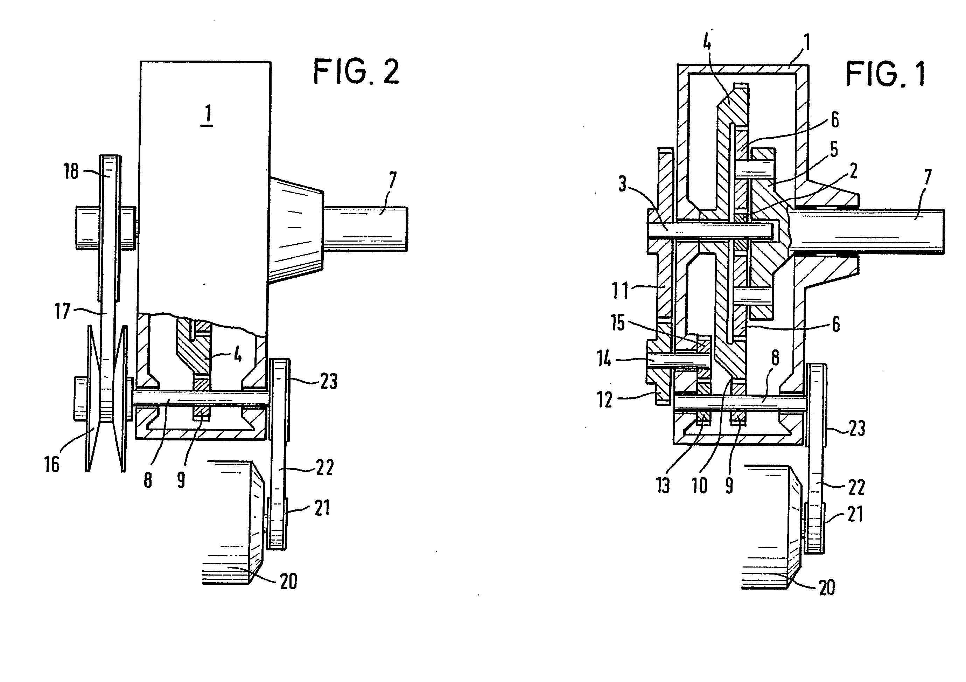

In der Fig. 1 ist eine erste Ausführungsform des erfindungsgemässen Überlagerungsgetriebes dargestellt. In einem Gehäuse 1 ist ein Planetengetriebe angeordnet. Es besteht aus dem Hohlrad 4, das auf der Sonnenradwelle 3 drehbar angeordnet ist. Eine Innenverzahnung des Hohlrades 4 greift in Planetenräder 6, die auf einem Planetenradträger 5 drehbar gelagert sind. Die Planetenräder 6 greifen wiederum in das an der Sonnenradwelle 3 befestigte Sonnenrad 2. Die Welle 7 des Planetenradträgers ist die Abtriebswelle des Getriebes.

Der Antrieb des Getriebes erfolgt mit einem Motor 20, an dem eine Riemenscheibe 21 angebracht ist. Über diese Riemenscheibe 21 läuft ein Treibriemen 22 auf eine weitere Riemenscheibe 23, die an der eigentlichen Antriebswelle 8 des Überlagerungsgetriebes angebracht ist.

An dieser Antriebswelle 8 befindet sich ein Zahnrad 9, das in eine Außenverzahnung 10 des Hohlrades 4 eingreift. Bei Drehung der Welle 8 dreht sich damit das Hohlrad 4 in der zur Welle 8 entgegengesetzten Richtung.

An der Welle 8 ist ein zweites Zahnrad 13 befestigt. Dieses zweite Zahnrad 13 greift in ein Umlenkzahnrad 15, das auf einer Umlenkwelle 14 sitzt. Dieses Umlenkwelle 14 ist aus. dem Gehäuse 1 des Planetengetriebes herausgeführt.

Das Vorschaltgetriebe besteht aus den beiden Zahnrädern 11 und 12, wobei das Zahnrad 11 auf der Sonnenradwelle 3 befestigt ist, das Zahnrad 12 auf der Umlenkwelle 14.

Wird mit Hilfe des Motors 20 die Antriebswelle 8 beispielsweise rechts herumgedreht, so dreht sich die Sonnenradwelle 3 und damit das Sonnenrad 2 ebenfalls rechts herum. Durch das Antriebszahnrad 9 wird das Hohlrad 4 dagegen links herumgedreht, so daß das Sonnenrad und das Hohlrad sich entgegengesetzt zueinander drehen. Hierdurch wird insgesamt eine hohe Untersetzung des Getriebes erzielt.

Die Zahnräder 11 und 12 stellen das Vorschaltgetriebe dar. Sie sind leicht von dem aus dem Gehäuse 1 herausgeführten Wellen, der Sonnenradwelle 3 und der Umlenkwelle 14, abnehmbar. Es lassen sich beliebige Übersetzungsverhältnisse des Vorschaltgetriebes bilden, die einzige Bedingung ist, dass in jedem Fall die Achsen dieser Zahnräder einen festen Abstand haben müssen, der durch den Abstand des Sonnenradwelle von der Umlenkwelle 14 festgelegt ist.

Die Fig. 2 zeigt eine weitere Ausführungsform des erfindungsgemässen Getriebes. Das Vorschaltgetriebe besteht in dem in Fig. 2 dargestellten Fall aus einem Riemengetriebe mit einer verstellbaren Riemenscheibe 16, einem Keilriemen 17 und einer weiteren Keilriemenscheibe 18. Da aufgrund des Riemengetriebes die Riemenscheibe 18 und mit ihr die Sonnenradwelle 3 sich gleichsinnig zu der Antriebswelle 8 dreht, ist bei dieser Ausführungsform das Umlenkzahnrad und die Umlenkwelle entbehrlich. Durch Verstellung der Keilriemenscheibe 16, im Bedarfsfall auch der Keilriemen-

scheibe 18, kann das Übersetzungsverhältnis des Vorschaltgetriebes beliebig verändert werden, so dass sowohl
die Umdrehungsgeschwindigkeit der Abtriebswelle 7 als
auch die Drehrichtung dieser Abtriebswelle verändert
werden kann.

Auch bei der in Fig. 2 dargestellten Ausführungsform
ist das Vorschaltgetriebe leicht auszuwechseln, indem die Keilriemenscheiben 16 und 18 von den entsprechenden Achsen einfach abgezogen werden und im Bedarfsfall durch anders gestaltete Keilriemenscheiben
ersetzt werden.

Dipl.-Ing. H. MITSCHERLICH
Dipl.-Ing. K. GUNSCHMANN
Dr. rer. nat. W. KÖRBER
Dipl.-Ing. J. SCHMIDT-EVERS
PATENTANWÄLTE

D-8000 MÜNCHEN 22
Steinsdorfstraße 10
☏ (089) · 29 66 84

0061575

7

Firma
Hans Lingl
Anlagenbau und Verfahrenstechnik
GmbH & Co.KG
Albrecht-Berblinger-Str. 6

7910 Neu-Ulm


A N S P R Ü C H E ,


1. Überlagerungsgetriebe, insbesondere Wendegetriebe, mit einem in einem Gehäuse (1) angeordneten Planetengetriebe aus einem Sonnenrad (2), einem auf der Sonnenradwelle (3) gelagerten Hohlrad (4) und zwischen dem Sonnenrad (2) und dem Hohlrad (4) auf einem Planetenradträger (5) angeordneten Planetenrädern (6), wobei das Sonnenrad (2) und das Hohlrad (4) angetrieben werden und die Planetenradträgerwelle (7) die Abtriebswelle ist, dadurch gekennzeichnet, daß ein auf einer Antriebswelle (8) angeordnetes Antriebszahnrad (9) in einer Außenverzahnung (10) des Hohlrades (4) eingreift und dass diese Antriebswelle (8) über ein auswechselbar angeordnetes Vorschaltgetriebe (11, 12) mit der Sonnenradwelle (3) im Eingriff steht.


2. Überlagerungsgetriebe nach Anspruch 1, dadurch gekennzeichnet, daß die Sonnenradwelle (3) und die Antriebswelle (8) aus dem Gehäuse herausgeführt sind und das Vorschaltgetriebe (11, 12) an der Außenseite des Gehäuses (1) angeordnet ist.

3. Überlagerungsgetriebe nach Anspruch 2, dadurch gekennzeichnet, daß das Vorschaltgetriebe (11, 12) ein Zahnradgetriebe ist.

4. Überlagerungsgetriebe nach Anspruch 1 und 3, dadurch gekennzeichnet, daß auf der Antriebswelle (8) ein zweites Zahnrad (13) angeordnet ist, welches in ein auf einer Umlenkwelle (14) angeordnetes Umlenkzahnrad (15) eingreift, wobei die Umlenkwelle (14) aus dem Gehäuse (1) herausgeführt ist und das Vorschaltgetriebe (11, 12) die Kraft von der Umlenkwelle (14) auf die Sonnenradwelle (3) überträgt.

5. Überlagerungsgetriebe nach anspruch 1 und 2, dadurch gekennzeichnet, daß das Vorschaltgetriebe ein Riemengetriebe (16, 17, 18) ist.

6. Überlagerungsgetriebe nach Anspruch 1 oder 2, dadurch gekennzeichnet, daß das Vorschaltgetriebe ein stufenlos regelbares Getriebe ist.

FIG. 2

FIG. 1